# EUROPEAN PATENT SPECIFICATION

(11) **EP 2 198 152 B1**
(45) Date of publication and mention of the grant of the patent: **17.05.2017**
(21) Application number: 08776077.3
(22) Date of filing: 28.07.2008
(51) Int. Cl.: F03D 1/06

(54) **A ROOT END JOINT FOR A WIND TURBINE BLADE**
WURZELENDVERBINDUNG FÜR EIN WINDTURBINENBLATT
ASSEMBLAGE D'EMPLANTURE DE PALE D'EOLIENNE

(30) Priority: 11.09.2007 GB 0717690
(43) Date of publication of application: 23.06.2010
(73) Proprietor: Blade Dynamics Limited, Cowes PO31 8HU (GB)
(72) Inventor: RUDLING, Paul, Calbourne P030 4JE Isle of Wight (GB)
(74) Representative: Bedford, Grant Richard
(86) International application number: PCT/GB2008/002571
(87) International publication number: WO 2009/034292

(56) References cited:
- EP-A- 0 019 691
- EP-A- 0 258 926
- WO-A-96/38639
- DE-U1- 29 704 151
- US-A- 5 401 138

## Description

The present invention relates to a root end joint for a wind turbine blade.

The root end joint in a wind turbine is a structure which connects the main part of the turbine blade to the hub on the turbine tower. Currently, a root end joint for a wind turbine blade which has an integral spar is manufactured in one piece by winding glass reinforced resin on a male mandrel to produce a section which is tubular at one end to connect to the hub and rectangular at the opposite end to connect to a spar. The root end joint is then incorporated into the spar as the spar is laminated and cured. The root end joint has holes drilled into the hub end in which metal studs with female screw threads are bonded which later allows the root end of the blade to be mechanically fastened to the turbine hub.

This method of manufacture requires a high amount of capital equipment in the form of ovens, mandrels and handling equipment that can contain and manipulate large root ends (currently 2 metres diameter and weighing 2,500kg). In addition, the root end must be manipulated in a large jig for the drilling of each stud hole. These large components then need to be shipped to the blade factory adding cost to each transport. The roots themselves are very thick in section throughout in order to contain the root studs and also to minimise the effect of the different flexural behaviour of the metal root studs and the composite root end.

EP 0 019 691, which is considered as the closest prior art to the subject-matter of claim 1, discloses an assembly for connecting a wind turbine blade to a hub comprising a tubular bushing within which is arranged a tubular pipe. The tubular pipe is arrange to be connected to a rotor head.

According to a first aspect of the present invention, there is provided a sub-assembly for connecting a wind turbine blade to a hub, the sub-assembly comprising a tubular support member, one end of which is arranged to be connected to the hub and at least two spaced bulkheads extending across the tubular support member and which are arranged to be supported by the tubular member, wherein each bulkhead has an opening for receiving a spar member of the wind turbine blade such that, in use, a portion of the spar member is supported within the tubular support member by the bulkheads such that the spar extends from the tubular support member.

The provision of a sub-assembly for the root end joint which has bulkheads within a tubular member to support the spar provides a number of advantages. Firstly, as the spar is supported within the root end, the external profile of the spar end of the root end joint does not need to be made rectangular to match the spar. This removes the need for manufacturing a complex shape transitioning from circular at one end to square at the opposite end and the associated tooling cost. Also, by supporting the spar and bulkheads within the sub-assembly, the need for incorporating the root into the spar as the spar is laminated is removed. This, coupled with the simpler shape allows the root component to be readily manufactured in a more standardised and economical process, thereby enabling lower cost, higher throughput, more repeatable production processes. A simpler fixing between the root end joint and the spar can also be achieved, allowing the final blade to be cost effectively assembled at a site close to the wind farm site for example.

The tubular support member may be manufactured as a single piece. However, preferably, it is made of two or more shells having a part-tubular shape which are fitted together to form the tubular support member. The bulkheads may be formed integrally with the tubular member or may be fixed in place once the tubular member has been formed. In the case of the tubular member made of the plurality of shells, each bulkhead may be formed of a number of separate components each in respective shells.

Preferably, the tubular support member is made of fibre reinforced plastic. This allows for enhanced control of the laminate orientation and structure. In particular, in areas of high axial load, there is a greater proportion of uni-directional material and in areas where there are high shear loads there is more multi-axial material. This allows the properties and proportions of the material to be optimised thereby significantly reducing material usage and cost.

The root end joint may be applied to any type of spar construction. One way of doing this would be to attach a first spar bulkhead to the spar. The spar bulkhead will be connected to one of the bulkheads in the tubular support member, and a second spar bulkhead will then be connected to the spar and to the other bulkhead in the tubular support member to complete the assembly. However, preferably, the spar comprises a plurality of shear webs. Such a spar may be a known box beam spar into which one or more additional shear webs have been attached at the root end. Alternatively, the spar may comprise a plurality of beams arranged side-by-side, each beam having a longitudinal web with a flange at either edge.

In this case, the present invention extends to a combination of a root end joint comprising a sub-assembly according to the first aspect of the present invention in combination with a spar unit with a plurality of shear webs, the spar unit being connected to the bulkheads primarily through the shear webs.

A particularly efficient way to make the connection is primarily through the shear webs, thereby resulting in a reduction in the material required for the joint.

In order to provide additional support for the connection through the shear webs, bearing blocks are preferably provided to reinforce and transfer load through adjacent shear webs. In order to complete this joint, at least one pin is preferably inserted through each bulkhead and the associated bearing blocks.

An example of the present invention will now be described with reference to the following drawings in which:
Fig. 1 is a schematic isometric view of a partially completed wind turbine blade;
Fig. 2 is a schematic isometric view of the spar, frame and root subassembly of the blade of Figure 1;
Fig. 3, is a schematic cross-sectional view along the line A-A of Figure 1;
Fig. 4 is a schematic isometric view of the skin panels and frame members of Figure 1 prior to assembly;
Fig. 5 is a schematic isometric view of a tubular support member which forms part of the root end joint of Figure 1;
Fig. 6 is a schematic isometric view of a pair of support mouldings which form part of the root end joint;
Fig. 7 is a schematic isometric view of a bulkhead attached to the spar of Figure 1;
Fig. 8 is a schematic cross-sectional side view of the root end joint during assembly;
Fig. 9 is a schematic cross-sectional side view of the complete root end joint;
Fig. 10 is a schematic isometric view of an open-section beam which forms a part of the spar of Figure 1;
Fig. 11 is a schematic isometric view of the component parts of the open-section beam of Figure 10;
Fig. 12 is a schematic isometric view of a first portion of the spar of Figure 1;
Fig. 13 is a schematic isometric view of a second portion of the spar of Figure 1;
Fig. 14 is a schematic view in plan and cross-section of the spar of Figure 1;
Fig. 15 is a perspective view of a second example of a root end joint showing two halves of the root end joint prior to assembly;
Fig. 16 is a view similar to Fig. 15 showing the two halves assembled and the spar unit prior to its insertion in the root end joint;
Fig. 17 is a view similar to Fig. 16 showing the spar unit in place;
Fig. 18 is a cross-section in a horizontal plane through the root end joint and spar unit which is similar in principle to the example of Figs. 15 to 17 but varies in some of the detail; and
Figs. 18A-18C are cross-sections through lines A-C respectively in Fig. 18.

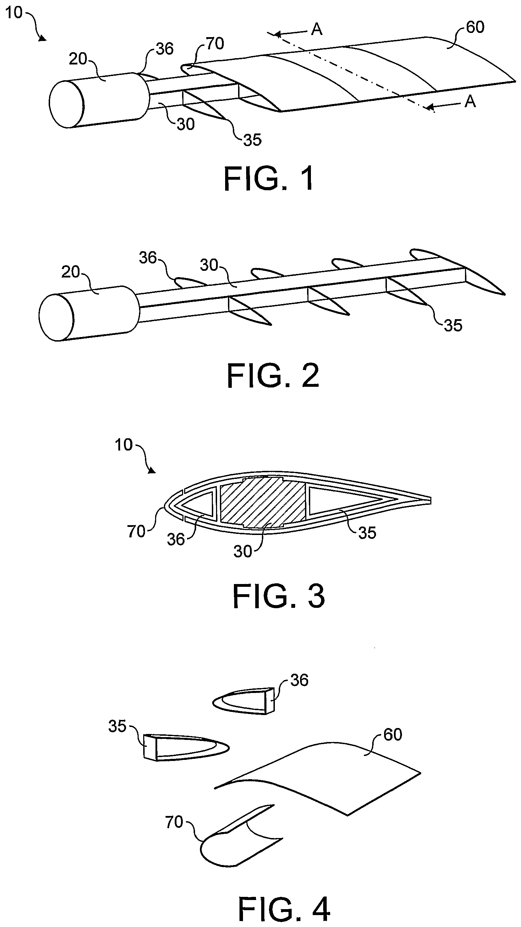

Figure 1 shows a partially complete wind turbine blade 10 comprising a load bearing spar 30 which is connected to a root subassembly 20 as will be described in greater detail below. The spar 30 supports frame members 35, 36 onto which skin panels 60, 70 are mounted to form the outer surface of the blade 10.

In the example shown in Figures 1 to 3, the frame members 35, 36 are made of carbon fibre reinforced plastic and consist of leading side frame members 36 and trailing side frame members 35. As shown, the frame members 35, 36 are shaped to largely correspond to the cross-sectional profile of the blade 10. In an alternative construction, the frame members may be integral with the skin panels rather than the spar as set out in our earlier application GB 0807515.2

The skin panels 60, 70 are attached to the frame members 35, 36 and spar 30 to form a continuous outer skin. The leading edge skin panels 70 are attached to the leading side frame members 50 and the remaining skin panels 60 are attached to the leading side frame members 36, the spar 30 and trailing side frame members 35.

The skin panels 60 are made of glass fibre reinforced plastic and have a gel coat or paint which is applied either before or after the skin panels 60 are assembled on the frame. Alternatively, the panels are covered with a coating such as that disclosed in GB0805713.5. The leading edge skin panels 70 are made of a composite material and have a wear resistant coating which is applied either before or after the leading edge skin panels 70 are assembled.

The root assembly 20, spar 30, frame members 35, 36 and skin panels 60, 70 are glued together in a jig to ensure dimensional accuracy. The jig itself (not shown) is a modular jig comprising a plurality of jig modules none of which exceeds 20m in length to facilitate transport of the jig modules to the wind turbine assembly site. In this example mechanical fixings such as bolts and clips are also used to connect the various components of the blade 10 together. In an alternative example, only glue or only mechanical fixings may be used.

Figure 4 shows examples of the individual skin panels 60, 70 and frame members 35, 36 which form part of the kit for making the finished blade 10. The skin panels 70, 60 are shaped so that they may be stacked one within another during storage and transport.

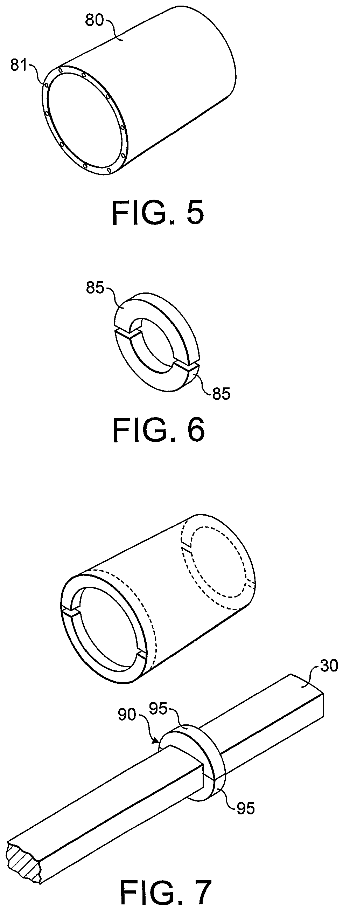

Figure 5 shows a tubular support member 80 which forms part of the root subassembly 20 of Figure 1. The tube 80 is a filament wound glass fibre reinforced plastic tube of approximately 5m in length. The tube 80 is manufactured on a male mandrel so that it has a precise internal dimension. Threaded holes 81 are located in one end of the tube 80 for connection to the hub of a wind turbine.

A pair of glass fibre reinforced plastic support mouldings 85 are shown in Figure 6. These support mouldings 85 have an accurate outer curved surface which is achieved either by using a female mould or by machining. The support mouldings 85 are C-shaped with an outer radius of curvature which matches that of the internal radius of curvature of the tube 80.

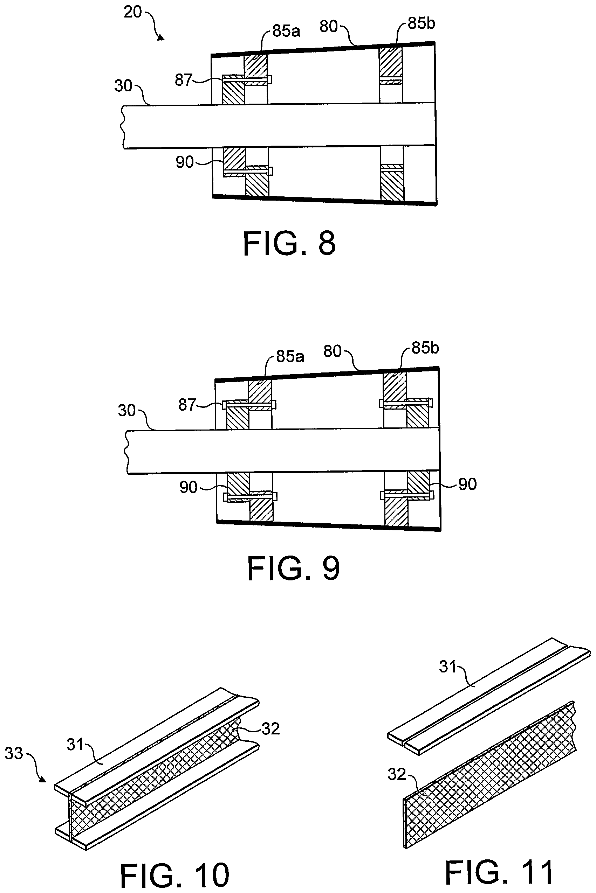

As shown in Figures 8 and 9, two pairs of support mouldings 85 are bonded to the inner surface of the tube 80. The support mouldings, which are approximately 100mm to 150mm deep, are bonded approximately 200mm from either end of the tube 30.

Figure 7 shows a glass fibre reinforced plastic bulkhead 90 bonded to a portion of the spar 30. In this example the bulkhead 90 comprises two halves 95 which are bonded to each other and to the spar 30. In an alternative example, the bulkhead 90 is a single piece with a hole through it to receive the spar 30.

During assembly, a first bulkhead 90 is bonded to the spar 30. The spar 30 is then inserted into the tube 80 from the end opposite to the hub connection end until the bulkhead 90 abuts a first pair support mouldings 85a. The bulkhead 90 is then attached to the support mouldings 85a by adhesive and bolts 87 which extend through the bulkhead 90 and support moulding 85a. A second bulkhead 90 is then bonded to the portion of the spar within the tube 80 and attached to the second pair of support mouldings 85b by adhesive and bolts 87.

Figure 10 shows an open-section I-beam 33 which forms part of the spar 30. The I-beam 33 is itself made up of component flanges 31 positioned either side of a longitudinal web 32 at either longitudinal edge of the web 32. The flanges 31 are made of unidirectional carbon or glass fibre reinforced plastic and the web 32 is made of ±45° multi-axial carbon or glass fibre reinforced plastic. The flanges 31 are formed as pre-forms, for example, in a pulltrusion process and have a rectangular cross-section. The flanges 31 may, in an alternative example, have a curved cross-section to fit the outer profile of the blade more closely. The flanges may be stackable such that extra thickness can be provided for a particular blade part. However, in order to keep the component parts of the spar as simple as possible it is preferred that the flanges have a rectangular or other stackable cross-section. Also, at certain parts of the blade, such as the root end, which bear higher loads parallel to the flange surface, additional pre-forms, for example, in the shape of angle sections may be provided at the interface of the web 32 and each flange 31.

The flanges 31 are adhered to either side of the web 31 proximate the longitudinal edges of the web to form the I-beam 33. Alternatively, the I-beam 33 could comprise two flanges, each having a longitudinal slot for receiving the respective edges of the web. The I-beam 33 is assembled in a jig to ensure dimensional accuracy. In an alternative example, the flanges 31 are connected to the web 32 by mechanical fixings in addition to, or as an alternative to adhesive.

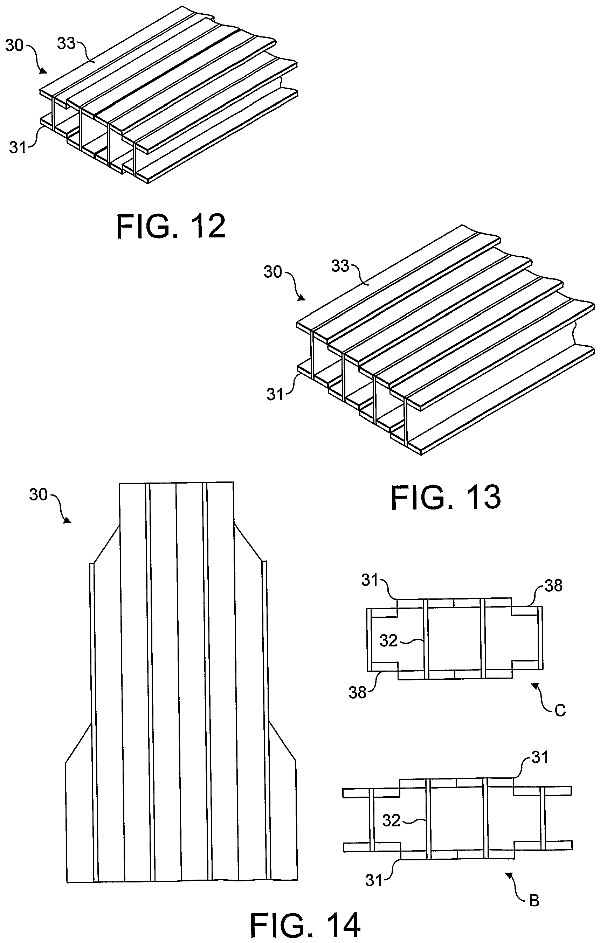

As shown in Figure 12, the spar 30 is made up of a plurality of I-beams 33 arranged side by side. As shown in cross-sections B and C of Figure 14, the flanges 31 are located at either side of the spar 30 in a section taken through the spar. The I-beams 33 are held in a jig to ensure dimensional accuracy and are adhered to one another along the flanges 31. Alternatively, or additionally, the flanges may be connected together by mechanical fixings.

In the example shown in Figures 12 and 14, the depth of the spar 30 is greatest in the middle. This configuration is used to account for the curvature of the skin panels 60 which attach to the spar 30 and which define the outer surface of the wind turbine blade as shown in Figure 3. The depth change between the outermost I-beams 33 and the innermost I-beams 33 is achieved by altering the depth of the web 32. Furthermore, the depth of the spar 30 decreases from the root end to the tip end. This decrease in depth is achieved, in part, by decreasing the depth of the webs 32 from one end of the component I-beams 33 to the other, such that they have a substantially trapezoidal configuration. As described further below, the depth of the spar 30 is also decreased along the length of the spar by reducing the overall depth of the webs 32 in successive spar units.

Figure 13 shows another arrangement of the I-beams 33 in a second section of the spar 30 which section includes a twist. In this section the I-beams 33 are arranged side by side with their flanges 31 offset from one another so that the flanges 31 of one I-beam are not coplanar with the flanges 31 of an adjacent I-beam 33. The extent of the offset increases along the length of the spar 30. The twist allows the spar to conform to the outer profile of the blade 10 which twists about the longitudinal axis of the blade.

Figure 14 shows a view in plan and in cross-section of the spar 30 and illustrates how the width of the spar 30 tapers from the root end to the tip end. This taper is achieved, in part, by dropping off flange sections 31 of the I-beams 33 so that the outermost beams have a channel cross-section (in the shape of a C), rather that an I-beam cross-section. Cross-section B illustrates the widest portion of the spar 30 formed of four I-beams 33, and cross-section C shows a reduced width section of the spar 30 which is formed of two I-beams 33 and two channel beams 38. The width of the spar 30 is also reduced along the length of the spar by connecting successive spar units having progressively fewer component beams 33, together end to end.

The spar 30 may be formed from a plurality of full length I-beams 33 and/or channel beams 38. However, in the present example, the spar 30 comprises a plurality of spar units, each of no more that 12m in length, joined end to end.

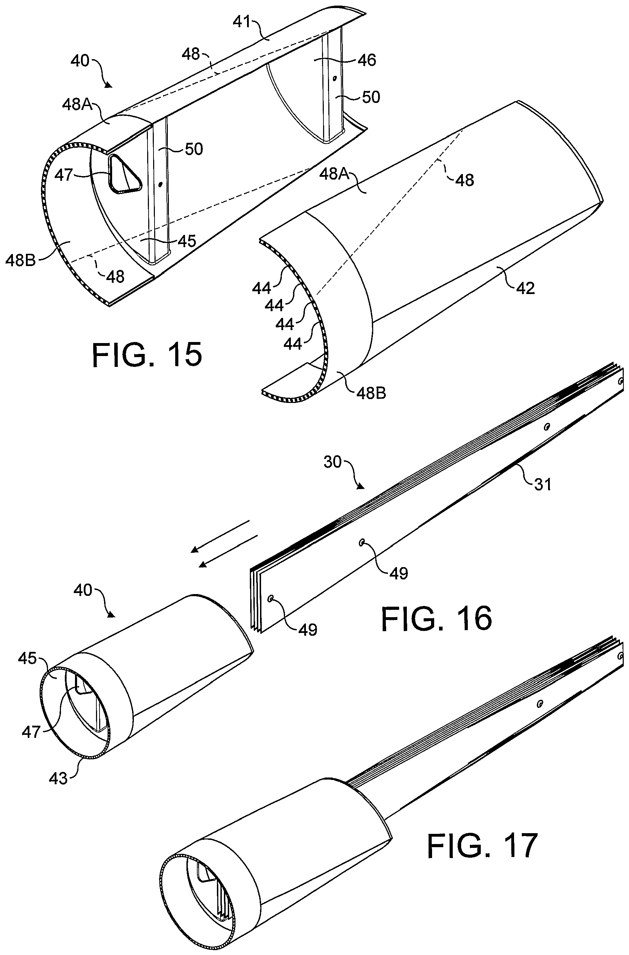

A second example of a root end joint will now be described with reference to Figs. 15 to 18.

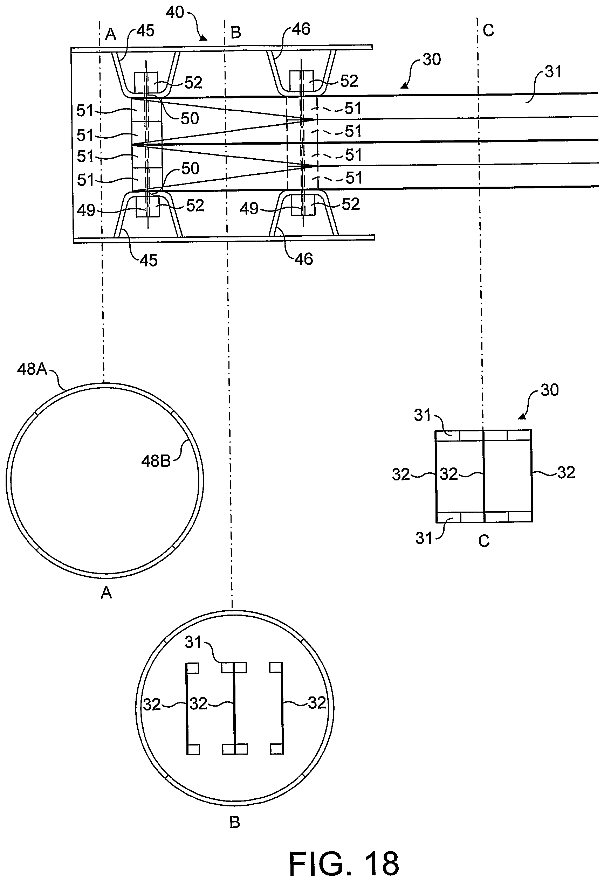

The root end joint 40 comprises a pair of shells 41, 42 which make up the generally tubular root end joint as best shown in Fig. 16. This has a circular cross-section 43 at the hub end which is provided with a plurality of threaded inserts 44 for connection to the hub. The root end joint 40 then tapers towards the spar end such that, at the spar end, it has a generally elliptical cross-section. Each shell has a first bulkhead member 45 and a second bulkhead member 46. The first bulkhead member 45 has a cut-out portion 47 to allow access for the insertion of shear pins. When the root end joint is assembled the spacing between the pair of first bulkhead sections 45 and the pair of second bulkhead sections 46 is designed to accommodate the spar as shown in Fig. 18 and described in more detail below.

The shells and bulkheads of the root end joint can be made from a number of materials such as fibre reinforced plastic, metals and wood for example. The root end joints are typically between 4 metres and 10 metres in length when measured along the longitudinal axis. The root end joint typically has a weight of around 200kg so that it can easily be manipulated without the use of large overhead cranes.

The root pieces can be covered in polyurethane paint or polyester or epoxy gelcoat as is currently known in the art. Alternatively, they can be covered in the thermoplastic coating forming the subject of our earlier application GB 0805713.5. The covering can be carried out prior to the assembly of the root end joint and the individual seam between the pieces can be taped after assembly. Alternatively, the root end joint can be coated after assembly.

In Fig. 15, the dashed lines 48 generally separate each of the halves into regions 48A at the upper and lower extremities of the root end joint at the region adjacent to the root end and a region 48B comprising the remainder of the root end joint. The region 48A is a region of high axial stress and therefore, in this region, the material contains a higher proportion of uni-axial material with the fibres aligned in the axial direction of the joint. In the remainder of the root end region 48B, there are higher shear loads and the material contains a higher proportion of multi-axial material. This is achieved by varying the type and orientation of the fibre in the laminate layers during the root manufacturing process.

As shown in Figs. 16 and 17 a spar comprising a plurality of shear webs is inserted into the root end joint. The spar is constructed in accordance with the principles described in relation to Figs. 10 to 14. The spar is provided with a pair of holes 49 which align with corresponding holes 50 in the bulkheads.

The joint is shown in more detail in Fig. 18. This is slightly different from Figs. 15 to 17 in that the spar 30 is wider than that shown in the earlier figures and the space between the bulkhead 45, 45 and 46, 46 is therefore correspondingly greater. Also, the spar comprises a pair of box beams as shown in Fig. 18C and the flanges 31 extend into the root end joint, whereas in Figs. 16 and 17 the flanges 31 terminate short of the root end joint.

A shown in Figs. 18 and 18B the flanges 31 begin to taper off following the connection to the second bulkhead 46 as the load begins to transferred to the root end joint 40.

Attached to the shear webs 32 in the regions adjacent to the bulkheads 45, 46 are a number of bearing blocks 51 corresponding to bearing blocks 52 provided within the bulkheads. Each of the bearing blocks 51, 52 have a central opening aligned with the holes 49 and 50 through which a pin is inserted to secure the joint. The pin may be a metal pin which is chilled prior to insertion and allowed to thermally expand so as to be a tight fit within the openings. In addition, the bearing blocks may be bonded to one another and to the bulkheads to provide additional strength.

Once the root end joint 40 and spar unit 30 have been assembled, the remainder of the blade is then assembled by joining additional spar units and the additional skin panels.

## Claims

1. A sub-assembly (20) for connecting a wind turbine blade to a hub, the sub-assembly comprising a tubular support member (80), wherein one end of the tubular support member (80) is arranged to be connected to the hub ; the sub-assembly (20) being **characterised by** at least two spaced bulkheads (45) extending across the tubular support member (80) and which are arranged to be supported by the tubular support member (80), wherein each bulkhead (45) has an opening for receiving a spar member (30) of the wind turbine blade such that, in use, a portion of the spar member (30) is supported within the tubular support member (80) by the bulkheads (45) such that the spar (30) extends from the tubular support member (80).

2. A sub-assembly (20) according to claim 1, wherein the tubular support member (80) is made of two or more shells (41, 42) having a part-tubular shape which are fitted together to form the tubular support member (80).

3. A sub-assembly (20) according to claim 1 or claim 2, wherein the tubular support member (80) is made of fibre reinforced plastic.

4. A sub-assembly (20) according to claim 3, wherein in areas of high axial load, there is a greater proportion of uni-directional material and in areas where there are high shear loads there is a greater proportion of multi-axial material.

5. A device comprising the sub-assembly (20) according to any one of the preceding claims and a spar (30) with a plurality of shear webs (32), the spar being connected to the bulkheads (45) primarily through the shear webs (32).

6. A device according to claim 5, wherein the spar (30) comprises a plurality of beams (33) arranged side-by-side, each beam (33) having one of the longitudinal shear webs (32) with a flange (31) at either edge.

7. A device according to claim 6, wherein the spar (30) comprises three or more beams (33) arranged side-by-side, each beam (33) having one of the longitudinal shear webs (32) with a flange (31) at either edge.

8. A device according to any of claims 5 to 7, wherein bearing blocks (51) are provided to reinforce and transfer load from and to adjacent shear webs (32).

9. A device according to claim 8, wherein at least one pin is inserted through each bulkhead (45) and the associated bearing blocks (51).

## Patentansprüche

1. Unterbaugruppe (20) zum Verbinden eines Windturbinenblatts mit einer Nabe, wobei die Unterbaugruppe ein rohrförmiges Stützelement (80) umfasst, wobei ein Ende des rohrförmigen Stützelements (80) angeordnet ist, um mit der Nabe verbunden zu werden; wobei die Unterbaugruppe (20) durch mindestens zwei beabstandete Trennwände (45) gekennzeichnet ist, die sich über das rohrförmige Stützelement (80) erstrecken und welche angeordnet sind, um durch das rohrförmige Stützelement (80) gestützt zu werden, wobei jede Trennwand (45) eine Öffnung zum Aufnehmen eines Holmelements (30) des Windturbinenblatts aufweist, so dass im Gebrauch ein Abschnitt des Holmelements (30) innerhalb des rohrförmigen Stützelements (80) durch die Trennwände (45) gestützt wird, so dass sich der Holm (30) von dem rohrförmigen Stützelement (80) erstreckt.

2. Unterbaugruppe (20) nach Anspruch 1, wobei das rohrförmige Stützelement (80) aus zwei oder mehreren Schalen (41, 42) mit einer Teilrohrform hergestellt ist, welche zusammengefügt werden, um das rohrförmige Stützelement (80) zu bilden.

3. Unterbaugruppe (20) nach Anspruch 1 oder Anspruch 2, wobei das rohrförmige Stützelement (80) aus faserverstärktem Kunststoff hergestellt ist.

4. Unterbaugruppe (20) nach Anspruch 3, wobei in Bereichen einer hohen axialen Last ein größerer Anteil an unidirektionalem Material vorhanden ist und in Bereichen, wo hohe Scherlasten vorhanden sind, ein größerer Anteil an multiaxialem Material vorhanden ist.

5. Vorrichtung umfassend die Unterbaugruppe (20) nach einem der vorherigen Ansprüche und einen Holm (30) mit mehreren Scherstegen (32), wobei der Holm mit den Trennwänden (45) primär durch die Scherstege (32) verbunden ist.

6. Vorrichtung nach Anspruch 5, wobei der Holm (30) mehrere Balken (33) umfasst, die nebeneinander angeordnet sind, wobei jeder Balken (33) einen der Längsscherstege (32) mit einem Flansch (31) an jedem Rand aufweist.

7. Vorrichtung nach Anspruch 6, wobei der Holm (30) drei oder mehr Balken (33) umfasst, die nebeneinander angeordnet sind, wobei jeder Balken (33) einen der Längsscherstege (32) mit einem Flansch (31) an jedem Rand aufweist.

8. Vorrichtung nach einem der Ansprüche 5 bis 7, wobei Trageblöcke (51) zum Verstärken und Übertragen von Last von und zu benachbarten Scherstegen (32) bereitgestellt sind.

9. Vorrichtung nach Anspruch 8, wobei mindestens ein Stift durch jede Trennwand (45) und die zugehörigen Trageblöcke (51) eingeführt ist.

## Revendications

1. Sous-ensemble (20) pour raccorder une pale d'éolienne à un moyeu, le sous-ensemble comprenant un élément de support tubulaire (80), dans lequel une extrémité de l'élément de support tubulaire (80) est agencée pour être raccordée au moyeu ; le sous-ensemble (20) étant **caractérisé par** au moins deux cloisons espacées (45) s'étendant en travers de l'élément de support (80) et qui sont agencées pour être supportées par l'élément de support tubulaire (80), dans lequel chaque cloison (45) a une ouverture pour recevoir un élément formant longeron (30) de la pale d'éolienne de sorte que, en cours d'utilisation, une partie de l'élément formant longeron (30) soit supportée dans l'élément de support tubulaire (80) par les cloisons (45) afin que le longeron (30) s'étende depuis l'élément de support tubulaire (80).

2. Sous-ensemble (20) selon la revendication 1, dans lequel l'élément de support tubulaire (80) est constitué de deux ou plus de coques (41, 42) ayant une forme en partie tubulaire qui sont assemblées l'une à l'autre pour former l'élément de support tubulaire (80).

3. Sous-ensemble (20) selon la revendication 1 ou la revendication 2, dans lequel l'élément de support tubulaire (80) est constitué d'une matière plastique renforcée par des fibres.

4. Sous-ensemble (20) selon la revendication 3, dans lequel, dans les zones de charge axiale élevée, il y a une plus grande proportion de matériau unidirectionnel et, dans les zones où il y a des charges de cisaillement élevées, il y a une plus grande proportion de matériau multiaxial.

5. Dispositif comprenant le sous-ensemble (20) selon l'une quelconque des revendications précédentes et un longeron (30) ayant une pluralité d'âmes de cisaillement (32), le longeron étant raccordé aux cloisons (45) principalement à travers les âmes de cisaillement (32).

6. Dispositif selon la revendication 5, dans lequel le longeron (30) comprend une pluralité de poutres (33) agencées côte-à-côte, chaque poutre (33) ayant l'une des âmes de cisaillement longitudinales (32) avec une aile (31) sur l'un ou l'autre bord.

7. Dispositif selon la revendication 6, dans lequel le longeron (30) comprend trois ou plus de poutres (33) agencées côte-à-côte, chaque poutre (33) ayant l'une des âmes de cisaillement longitudinales (32) avec une aile (31) sur l'un ou l'autre bord.

8. Dispositif selon l'une quelconque des revendications 5 à 7, dans lequel des blocs d'appui (51) sont disposés pour renforcer et transférer la charge venant des âmes de cisaillement adjacentes (32) et allant vers celles-ci.

9. Dispositif selon la revendication 8, dans lequel au moins une broche est insérée à travers chaque cloison (45) et les blocs d'appui associés (51).
